# DEMANDE DE BREVET EUROPEEN

(11) **EP 0 638 831 A1**
(43) Date de publication de la demande: **15.02.1995**
(21) Numéro de dépôt: 94401818.3
(22) Date de dépôt: 05.08.1994
(51) Int. Cl.: G02F 1/015

(54) **Dispositif photoréfractif à puits quantiques**

(30) Priorité: 09.08.1993 FR 9309784
(71) Demandeur: FRANCE TELECOM, F-75015 Paris (FR)
(72) Inventeur: Deveaud-Pledran, Benoît, F-22300 Lannion (FR); Guillemot, Christian, F-22700 Perros Guirec (FR); Gerard, Jean-Michel, F-75005 Paris (FR)
(74) Mandataire: Dubois-Chabert, Guy

(57) **Abrégé**

Ce dispositif photoréfractif, destiné à être exposé à un rayonnement d'inscription prévu pour créer un réseau de franges d'interférence dans le dispositif, et à un rayonnement de lecture que diffracte le réseau créé, comprend un matériau électro-optique ayant une structure de puits quantiques (2;24) et étant formé dans une matrice semiconductrice intrinsèque (8;22,26) et, de part et d'autre du matériau, dans la matrice semiconductrice, des moyens (4,6;28,30) aptes à piéger, tant parallèlement à l'axe de la structure que perpendiculairement à cet axe, les porteurs libres engendrés par le rayonnement d'inscription. Application aux télécommunications optiques.

## Description

La présente invention concerne un dispositif photoréfractif à puits quantiques.

Ce dispositif photoréfractif, ou structure photoréfractive, trouve notamment des applications dans le domaine des télécommunications optiques, en particulier dans le domaine de la commutation optique.

Dans un arrangement sous forme de double miroir à conjugaison de phase, une telle structure permet l'auto-focalisation d'un faisceau lumineux entre deux fibres optiques monomodes.

A ce sujet on consultera le document suivant :
(1) N. Wolfer, P. Gravey, J.Y. Moisan, C. Laulan, J.C. Launay, Optics Commun., 73, 351 (1989).

La réalisation d'une matrice plane de cellules photoréfractives peut permettre la connexion de réseaux de fibres optiques.

La présente invention autorise la mise en oeuvre d'un effet photoréfractif important à l'aide de couches minces de matériaux semiconducteurs.

En outre, de façon avantageuse, le dispositif objet de l'invention est susceptible d'avoir une grande fréquence d'utilisation ou fréquence de répétition (écriture et effacement).

On rappelle que le principe de fonctionnement d'un matériau photoréfractif réside dans l'inscription, au sein même de ce matériau, d'un réseau d'indices de réfraction qui sont assez importants pour diffracter de façon efficace des ondes optiques incidentes (rayonnement de lecture).

Ce réseau d'indices de réfraction dérive d'un réseau de charges électriques excitées optiquement par interférence de deux faisceaux lumineux, qui constituent le rayonnement d'inscription et qui sont généralement des faisceaux lasers.

Dans les matériaux photoréfractifs connus, ce réseau de charges électriques est conservé par piégeage de ces charges sur des centres profonds. Ce type de matériau photoréfractif doit avoir les caractéristiques suivantes :
- il doit être semi-isolant en l'absence de lumière,
- il doit présenter un effet électro-optique aussi fort que possible afin de présenter des variations importantes d'indice de réfraction,
- il doit posséder un nombre suffisant de centres profonds pour produire des modifications locales du champ électrique.

On ne connaît pas de matériau permettant d'optimiser à la fois la fonction électro-optique et la fonction de piégeage par des centres profonds.

Pour remédier à cet inconvénient, un dispositif décrit dans le document suivant :
(2) G. Picoli, P. Gravey, J.E. Viallet, Demande de brevet français n°91 07528 du 19 juin 1991 - voir aussi le document WO 92/22847
a été réalisé en vue de séparer ces deux fonctions.

Dans ce dispositif photoréfractif connu, un matériau à puits quantiques possédant un fort coefficient électro-optique est pris en sandwich entre deux couches semiconductrices possédant des dopages opposés.

On obtient ainsi un effet photoréfractif important avec une couche active dont l'épaisseur est voisine de 1 µm.

En revanche, les centres profonds de ce dispositif connu ont un faible coefficient d'absorption optique (10 cm⁻¹ pour une concentration de l'ordre de 10¹⁷ cm⁻²), ce qui nécessite une importante puissance optique incidente puisque seul un millième de la puissance disponible est absorbé dans les couches qui sont dopées par les centres profonds et dont l'épaisseur est de l'ordre de 1 µm.

Par ailleurs, il est bien connu que l'on peut réaliser des dispositifs électro-optiques extrêmement efficaces en appliquant un champ électrique à un multipuits quantique ou à un super-réseau.

On consultera par exemple à ce sujet le document suivant :
(3) D.S. Chemla, T.C. Damen, D.A.B. Miller, A.C. Gossard, W. Wiegmann, Appl. Phys. Lett., 42, 864(1983)
qui décrit des dispositifs électro-optiques fondés sur l'effet Stark confiné.

On consultera également le document suivant :
(4) E. Bigan, L'Echo des Recherches, 149, 29(1992)
qui décrit des dispositifs électro-optiques utilisant des modulateurs Wannier Stark à super-réseau.

Il est également connu de transformer des structures à puits quantiques en structures photoréfractives, en utilisant l'implantation ou l'irradiation pour créer des centres profonds dans ces structures.

A ce sujet on consultera le document :
(5) D.D. Nolte, D.H. Olson, G.E. Doran, W.H. Knox, A.M. Glass, "Resonant photorefractive effect in semi-insulating multiple quantum wells", J. Opt. Soc. Am. B, 7, 2217-2225 (1990).

On obtient ainsi un effet photoréfractif mais cet effet n'utilise pas (dans le système GaAs) les avantages de l'effet Stark confiné puisque le champ électrique associé au réseau de charges électriques est parallèle aux plans des puits quantiques.

De telles structures conduisent à de faibles variations d'indice de réfraction.

De plus fortes variations d'indice de réfraction ont été obtenues dans des multipuits quantiques à base de matériaux semiconducteurs II-VI, dans une configuration où le champ électrique peut être appliqué perpendiculairement aux couches de ces multipuits quantiques.

On consultera à ce sujet, le document suivant :
(6) Partovi, Glass, Olson, Zydzik, Short, Feldmann, Austin, Opt. Lett., 17, 655 (1992).

Cependant, les dispositifs photoréfractifs ainsi obtenus nécessitent l'utilisation d'une polarisation alternative car les charges électriques ne sont pas stockées correctement au voisinage des couches de contact de ces dispositifs.

La présente invention a pour objet un dispositif photoréfractif, ou structure photoréfractive, simple et possédant de meilleures performances que les dispositifs connus, mentionnés plus haut.

Le dispositif objet de l'invention utilise les fortes non-linéarités optiques des structures à puits quantiques.

Par "structure à puits quantiques", on entend un multipuits quantique ou un super-réseau ou encore une structure périodique plus compliquée comme par exemple une structure périodique à double puits quantique.

De façon précise, la présente invention a pour objet un dispositif photoréfractif destiné à être exposé à un rayonnement d'inscription qui est prévu pour créer un réseau de franges d'interférence dans le dispositif, et à un rayonnement de lecture que diffracte le réseau créé, ce dispositif comprenant :
- un matériau électro-optique ayant une structure de puits quantiques et étant formé dans une matrice semiconductrice intrinsèque, et
- des moyens de modification du champ électrique dans ce matériau lors d'un éclairement par le rayonnement d'inscription,

ce dispositif étant caractérisé en ce que les moyens de modification sont placés de part et d'autre du matériau, dans la matrice semiconductrice, et sont aptes à piéger, tant parallèlement à l'axe de la structure que perpendiculairement à cet axe, les porteurs libres engendrés par le rayonnement d'inscription (l'axe de la structure étant un axe perpendiculaire aux couches constituant les puits quantiques).

Comme on le verra mieux par la suite, la présente invention a ainsi le double avantage de pouvoir piéger un grand nombre de charges électriques et de permettre de travailler avec un faisceau de lecture dont la longueur d'onde est voisine d'une résonance excitonique, c'est-à-dire dans un domaine où les variations d'indice de réfraction sont importantes.

On obtient ainsi un meilleur dispositif que les dispositif connus, mentionnés plus haut, notamment les dispositif mentionnés dans le document (6).

En effet, la technique décrite dans ce document (6) implique également l'utilisation d'un faisceau de lecture dont la longueur d'onde est située au voisinage d'une résonance excitonique mais la présente invention permet de piéger un plus grand nombre de charges que ne le permet cette technique connue.

Les moyens de modification peuvent comprendre de part et d'autre du matériau, dans la matrice semiconductrice, au moins un puits quantique rugueux ou un plan d'inclusions aptes à piéger les porteurs libres.

Par "puits quantique rugueux", on entend un puits quantique dont la largeur varie localement de plus de 10%.

Selon un mode de réalisation particulier du dispositif objet de l'invention, les inclusions sont faites d'un matériau semiconducteur dont la bande interdite a une largeur inférieure à celle de la bande interdite du matériau des puits quantiques.

On peut également utiliser des inclusions en un matériau métallique.

Les inclusions peuvent avoir des tailles de l'ordre de 5 nm.

La densité de ces inclusions, dans chaque plan d'inclusions, peut être de l'ordre de 10¹¹ cm⁻².

Afin d'obtenir un dispositif photoréfractif de grande rapidité, l'épaisseur de matrice semiconductrice intrinsèque située de part et d'autre de l'ensemble qui contient le matériau électro-optique et qui est délimité par les plans d'inclusions, est de préférence suffisamment faible pour permettre aux porteurs piégés par les inclusions de quitter celles-ci par effet tunnel à travers cette épaisseur de matrice semiconductrice intrinsèque.

Dans ce cas, de part et d'autre de l'ensemble qui contient le matériau électro-optique et qui est délimité par les plans d'inclusions, la matrice semiconductrice intrinsèque peut former une barrière de potentiel de hauteur inférieure à celle que forme cette matrice à l'intérieur de cet ensemble.

La matrice semiconductrice intrinsèque peut constituer la région non intentionnellement dopée d'une structure de type p-i-n (diode p-i-n) ou n⁺/i/n⁺ ou p⁺/i/p⁺.

Le matériau électro-optique peut avoir une structure de multipuits quantiques ou une structure de super-réseau.

La présente invention sera mieux comprise à la lecture de la description d'exemples de réalisation, donnés ci-après à titre purement indicatif et nullement limitatif, en faisant référence aux dessins annexés sur lesquels :
- la figure 1 est un diagramme de bandes illustrant le principe de la présente invention,
- les figures 2A à 2C illustrent schématiquement l'obtention de plans d'inclusions utilisables dans la présente invention,
- la figure 3 est une vue schématique d'un mode de réalisation particulier du dispositif photoréfractif objet de l'invention,
- la figure 4 est un diagramme de bandes d'un dispositif photoréfractif conforme à l'invention,
- la figure 5 illustre schématiquement la configuration des bandes d'un dispositif conforme à l'invention polarisé sans éclairement,
- la figure 6 illustre schématiquement la configuration des bandes du dispositif de la figure 5 polarisé avec éclairement, et
- la figure 7 illustre schématiquement la configuration d'un pixel élémentaire d'un dispositif photoréfractif conforme à l'invention.

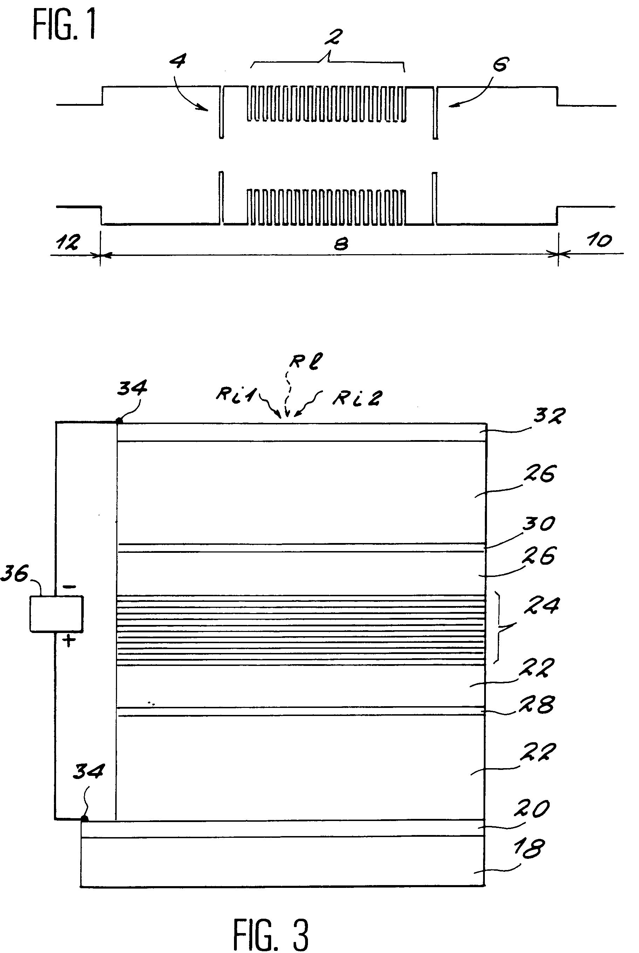

La figure 1 illustre schématiquement le diagramme de bandes d'un dispositif conforme à l'invention qui comprend une structure électro-optique à puits quantiques 2 et, de part et d'autre de cette structure 2, un ou plusieurs plans d'inclusions 4 et 6.

Dans l'exemple représenté, la structure à puits quantiques 2 ainsi que les plans d'inclusions 4 et 6 sont formés dans la partie non intentionnellement dopée 8 d'une diode p-i-n qui est polarisée en inverse.

La zone p et la zone n de la diode portent respectivement les références 10 et 12 sur la figure 1.

Chaque plan d'inclusions, qui est parallèle aux couches constituant les puits, contient, dans l'exemple représenté, un grand nombre de petites inclusions tridimensionnelles d'un matériau semiconducteur dont la bande interdite a une largeur plus faible que celle de la bande interdite du matériau constituant les puits quantiques.

La structure à puits quantiques 2 est soumise au champ électrique engendré dans la diode polarisée en inverse.

Ce champ électrique est perpendiculaire aux puits quantiques.

Lorsque le dispositif est exposé à un rayonnement d'inscription qui crée un réseau de franges d'interférence dans le dispositif, des porteurs libres sont créés par absorption lumineuse inter-bande sur les franges claires de ce réseau de franges d'interférence.

Cette création de porteurs libres réduit, par écrantage, le champ électrique engendré dans la diode, à l'endroit même de ces franges claires.

Ainsi, par la modulation de l'effet Stark confiné, cette modulation se faisant suivant le réseau de franges d'interférence, l'indice de réfraction de la structure est modulé pour les longueurs d'onde (rayonnement de lecture) qui sont voisines de la longueur d'onde de résonance excitonique.

Comme on l'a déjà indiqué, l'invention présente ainsi deux avantages, à savoir de pouvoir piéger un grand nombre de charges électriques (grâce aux inclusions) et de permettre de travailler au voisinage d'une résonance excitonique, c'est-à-dire dans une région où les modifications d'indice de réfraction sont importantes.

Cependant, pour que l'effet photoréfractif soit suffisant, il est nécessaire que le réseau de charges électriques qui est associé au réseau de franges d'interférence se maintienne en dépit des champs électriques présents et des phénomènes de diffusion des charges.

C'est justement grâce aux inclusions que le réseau de charges se maintient.

Les inclusions ont une fonction de piégeage des porteurs libres, électrons ou trous suivant le côté considéré de la structure (les trous sont piégés du côté de la zone p et les électrons sont piégés du côté de la zone n), et évitent de plus une diffusion latérale de ces porteurs.

Ce blocage au moins temporaire des porteurs, latéralement (c'est-à-dire parallèlement aux couches de la structure) et axialement (c'est-à-dire perpendiculairement à ces couches), permet l'inscription d'un réseau de charges électriques et la modification associée du champ électrique dans la structure à puits quantiques.

Ceci constitue un aspect essentiel du dispositif photoréfractif objet de l'invention qui rend ce dernier beaucoup plus efficace que les dispositifs connus, mentionnés plus haut.

Les plans d'inclusions peuvent être formés au cours de la croissance d'un dispositif conforme à l'invention, en utilisant le mode de nucléation tridimensionnelle que l'on observe lors de l'épitaxie de matériaux semiconducteurs III-V qui sont très désaccordés par rapport au substrat utilisé (on suppose le dispositif formé à partir de tels matériau III-V).

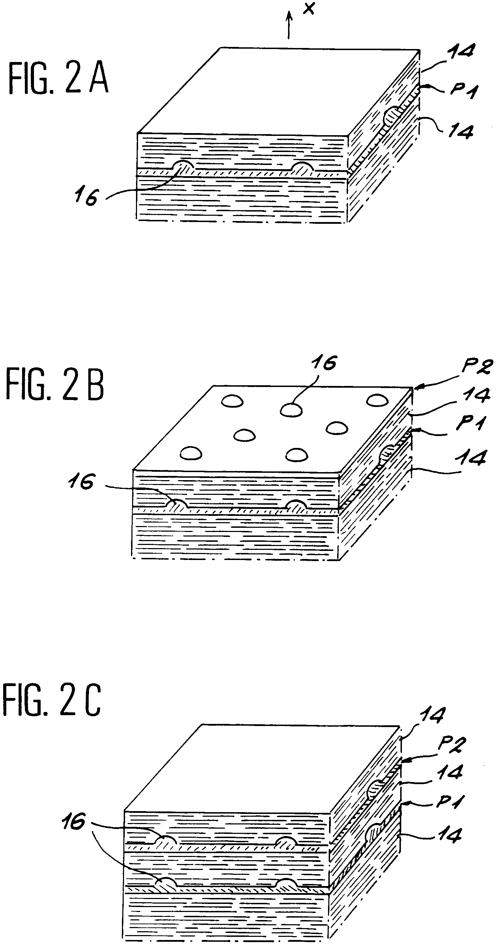

Les figures 2A à 2C illustrent la réalisation de telles inclusions dans une matrice III-V.

La figure 2A montre la matrice 14 par exemple en GaAs, dans laquelle on a formé un premier plan P1 d'inclusions 16, par exemple en InAs.

L'épaisseur des couches formées est comptée suivant l'axe X.

La figure 2B montre la formation d'un deuxième plan P2 d'inclusions 16 en InAs dans la matrice 14.

La figure 2C montre la matrice 14 dans laquelle on a formé les plans d'inclusions P1 et P2, une couche de GaAlAs ayant été formée sur le plan d'inclusions P2.

Pour réaliser un plan d'inclusions, on interrompt la croissance (qui est réalisée par jets moléculaires par exemple) d'une couche de GaAs (suivant la direction X) à l'endroit choisi.

On dépose alors une fine couche de InAs sur la surface de la couche de GaAs.

Ce matériau InAs présente un fort désaccord de maille (d'environ 7%) avec la couche de GaAs, ce qui influence fortement son mode de croissance.

La première couche moléculaire de InAs déposée accommode élastiquement cette différence de paramètres de maille et se dépose de façon uniforme.

Dès la deuxième monocouche, on passe, à la température usuelle de croissance (entre 500°C et 550°C), à un mode de croissance tridimensionnel.

On consultera à ce sujet le document suivant :
(7) L. Goldstein, F. Glas, J.Y. Marzin, M.N. Charasse, G. Le Roux, Appl. Phys. Lett., 47, 1099 (1985).

Des îlots de InAs sont formés à la surface.

La tailles de ces îlots est assez homogène, de l'ordre de 5 nm, et la répartition de ces îlots à la surface de la couche de GaAs est également assez homogène.

Cette taille caractéristique de 5 nm est très inférieure à la période du réseau de franges d'interférence, qui est de l'ordre de 1 µm, et permet donc l'inscription de n'importe quel réseau photoréfractif.

Si l'on reprend à ce stade la croissance de la couche de GaAs, les îlots seront enterrés au sein de cette couche et formeront ainsi des inclusions.

De telles inclusions, qui sont contraintes dans la matrice GaAs, ne contiennent cependant pas de dislocation et conservent une bonne qualité, ce qui permet des conditions de croissance ultérieure optimale.

La largeur de la bande interdite de InAs est inférieure à celle de la bande interdite de GaAs et les inclusions de InAs ont ainsi un caractère attractif à la fois pour les électrons et pour les trous.

L'étude en photoluminescence de telles inclusions de InAs dans GaAs a montré que le piégeage des porteurs était très efficace puisque la luminescence provenant de ces inclusions est très intense (beaucoup plus intense que celle qui provient de la matrice de GaAs).

De même des études ont montré la bonne qualité optique des inclusions.

L'étude de celles-ci en transmission montre que la luminescence est intrinsèque, c'est-à-dire liée à la présence d'une forte densité d'états conjointe à l'énergie de la luminescence.

Enfin, la taille des inclusions et donc la position de la raie de luminescence (ou de l'énergie de piégeage) dépendent directement de la quantité de InAs déposée après le passage en mode de croissance tridimensionnel.

Les énergies de confinement peuvent aller de 100 meV à 300 meV à la fois pour les électrons et pour les trous, ce qui permet une bonne localisation latérale, même à température ambiante et sous l'influence d'un fort champ électrique latéral.

La densité des inclusions dans un plan d'inclusions est très élevée (environ 10¹¹ cm⁻²), soit une inclusion tous les 30 nm.

On pourra donc capturer un grand nombre de porteurs sur un plan d'inclusions (environ 10¹¹ porteurs par cm⁻²).

L'insertion des inclusions est compatible avec la croissance ultérieure d'une structure à puits quantiques de bonne qualité.

Il suffit, pour ce faire, de déposer une fine couche tampon de GaAs (de l'ordre de 10 à 50 nm d'épaisseur) après le dépôt de InAs pour retrouver une surface parfaitement plane sur laquelle une structure à puits quantiques peut être épitaxiée.

Cette technique est généralisable à de nombreux autres systèmes de matériaux.

Sur un substrat en InP, on peut fabriquer des inclusions de InAs dans GaInAs ou dans InP.

Dans le système de matériaux épitaxiés sur GaAs, on peut concevoir que les puits actifs, c'est-à-dire les puits où a lieu l'électro-absorption, soient en InGaAs (avec environ 10% de In), et soient donc légèrement contraints, et que les inclusions de InAs soient placées dans une couche de AlGaAs.

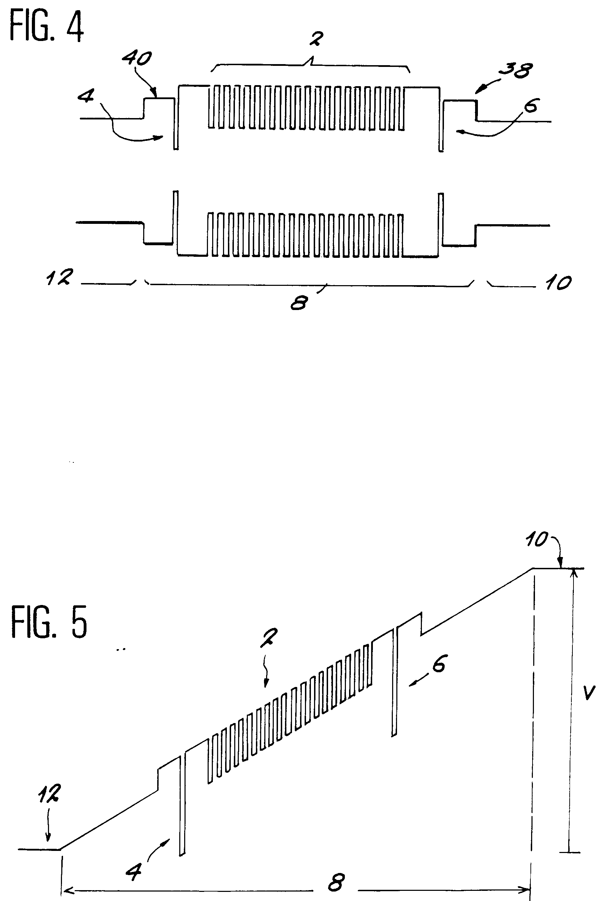

Ceci est schématiquement illustré par la figure 3 où l'on voit un dispositif photoréfractif conforme à l'invention qui comprend, sur un substrat 18, en GaAs dopé n⁺, une couche de contact 20 en GaAs dopé n⁺ (dopage de l'ordre de 10¹⁸ cm⁻³) et, sur cette couche de contact, une couche 22 en AlGaAs intrinsèque de l'ordre de 1 µm d'épaisseur.

Cette couche 22 est surmontée d'une structure 24 de puits quantiques en InₓGa₁₋ₓAs, x étant égal à 10%.

On réalise par exemple vingt puits dont les couches constitutives ont une épaisseur de 10 nm et alternent avec des couches de Al_{y}Ga_{1-y}As de 10 nm d'épaisseur, avec y égal à 30%.

Au-dessus de la structure à puits quantiques 24, on forme une couche de AlGaAs intrinsèque 26 de l'ordre de 1 µm d'épaisseur.

De part et d'autre de la structure à puits quantiques 24 et à environ 20 nm de celle-ci, le dispositif comprend des plans d'inclusions 28 et 30 constitués de trois monocouches de InAs.

Au-dessus de la couche 26 en AlGaAs intrinsèque, le dispositif comprend une couche de contact 32 en GaAs dopé p⁺ (dopage de l'ordre de 10¹⁸ cm⁻³).

On aperçoit également sur la figure 3 des contacts électriques 34 disposés au bord du dispositif, l'un des contacts 34 étant sur la couche de contact 32 et l'autre contact 34 étant sur un bord de la couche de contact 20, le dispositif étant réalisé de façon que le bord de cette couche de contact 20 ne soit pas recouvert par les couches qui sont empilées sur cette couche 20.

La polarisation du dispositif de la figure 3 est réalisée par des moyens de polarisation appropriés 36 permettant une polarisation en inverse de ce dispositif, la couche de contact 32 étant portée à un potentiel négatif par rapport à la couche de contact 20.

Dans le cas où les puits sont réalisés à partir de GaAs au lieu de InGaAs, la longueur d'onde de lecture change, le substrat en GaAs est absorbant à cette longueur d'onde de lecture et il faut alors soit retirer le substrat par attaque chimique, ce qui est un processus complexe qui limite les possibilités d'intégration du dispositif, soit placer ce dernier sur une couche réfléchissante située entre la couche de contact dopée n⁺ et la zone intrinsèque adjacente.

Il est bien connu de l'homme de l'art que de telles couches réfléchissantes sont aisément intégrables en réalisant une succession de couches de AlAs et de GaAlAs d'épaisseur égale au quart de la longueur d'onde du rayonnement de lecture.

Si les puits sont en GaAs, on peut réaliser en AlGaAs les barrières séparant ces puits et utiliser alors des inclusions en InAs.

On notera que les plans équipotentiels qui résultent des couches de contact dopées respectivement n⁺ et p⁺ ont tendance à écranter la variation locale de charges obtenue dans les plans d'inclusions, d'où la nécessité d'interposer une épaisseur suffisante de matériau intrinsèque entre les plans d'inclusions et ces couches de contact.

Si l'on veut réaliser un dispositif photoréfractif rapide, il est nécessaire que les charges piégées quittent les inclusions plus rapidement qu'elles ne peuvent se déplacer latéralement (c'est-à-dire parallèlement aux plans d'inclusions).

On peut estimer que le temps caractéristique de déplacement latéral est de l'ordre de 1 ns et il faut donc que les charges quittent les puits correspondant aux inclusions dans un temps comparable.

Pour ce faire, il suffit d'autoriser le départ de ces charges par effet tunnel à travers une mince barrière comme l'illustre la figure 4.

Cette figure 4 est identique à la figure 1 excepté que l'épaisseur des couches 38 et 40 de matériau intrinsèque, qui sont respectivement comprises entre la zone 10 et le plan d'inclusions 6 et entre la zone 12 et le plan d'inclusions 4, est beaucoup plus faible que dans le cas de la figure 1 pour permettre cet effet tunnel.

Cette épaisseur est par exemple de l'ordre de 5 nm.

Dans l'exemple représenté sur la figure 4, la hauteur de barrière du matériau intrinsèque (par exemple AlGaAs intrinsèque) est réduite vers l'extérieur des plans d'inclusions, c' est-à-dire dans les zones référencées 38 et 40, de façon à favoriser l'échappement des porteurs parallèlement à l'axe du champ électrique, c'est-à-dire parallèlement à l'axe X de la figure 2A, par rapport à leur déplacement latéral, c'est-à-dire perpendiculaire à l'axe X.

Il suffit d'obtenir le rapport adéquat entre l'émission thermoionique au-dessus des barrières et le temps d'échappement par effet tunnel.

On peut par exemple réaliser les zones 38 et 40 en AlₓGa₁₋ₓAs avec x égal à 25%.

Deux types de structures électro-optiques peuvent être envisagées pour la réalisation de l'invention.

L'une utilise des multi-puits quantiques (alternance de couches de l'ordre de 15 nm d'épaisseur et de couches de l'ordre de 10 nm d'épaisseur par exemple), ce qui donne un effet Stark confiné, quadratique avec le champ électrique.

L'autre utilise un super-réseau (alternance de couches de l'ordre de 3 nm d'épaisseur et de couches également de l'ordre de 3 nm d'épaisseur par exemple), ce qui donne un effet Wannier-Stark, linéaire avec le champ électrique.

Cette deuxième configuration présente le double avantage de la linéarité de l'effet électro-optique par rapport au champ électrique appliqué et d'une meilleure mobilité des porteurs à l'énergie à laquelle ils sont créés.

En effet, dans une structure à multipuits quantiques, les porteurs photocréés ne donnent lieu à un fort courant que s'ils parviennent à s'échapper des puits par thermo-émission ou par effet tunnel, deux processus qui ne sont pas très efficaces.

Dans une structure à super-réseau, les porteurs sont aptes à subir un effet tunnel au-dessous de l'énergie des barrières et peuvent donc être capturés directement par effet tunnel dans les inclusions.

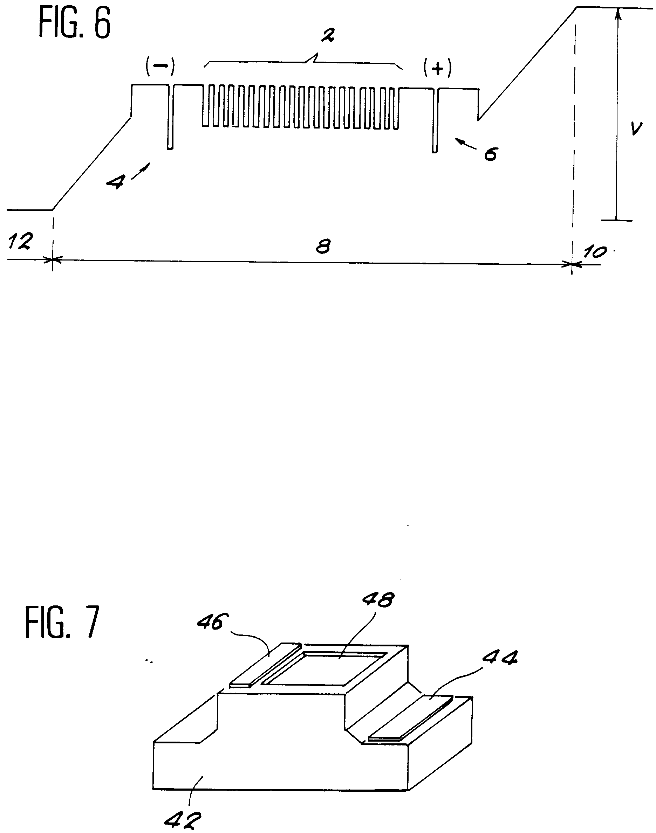

Les figures 5 et 6 illustrent schématiquement le fonctionnement d'un dispositif photoréfractif conforme à l'invention.

On polarise ce dispositif en inverse, en appliquant une tension électrique appropriée V entre la couche de contact dopée p⁺ (zone 10) du dispositif et la couche de contact dopée n⁺ (zone 12) de ce dispositif.

Un champ électrique externe est ainsi appliqué à ce dispositif.

En l'absence d'éclairement (figure 5), le champ électrique appliqué au dispositif est uniformément réparti.

Sous éclairement (figure 6), c'est-à-dire dans les franges d'interférence claires du réseau de franges d'interférence créé à la surface du dispositif, des charges positives sont piégées dans le plan d'inclusions 6 et des charges négatives sont piégées dans le plan d'inclusions 4, ce qui écrante le champ électrique appliqué à l'ensemble des puits quantiques.

Il est alors possible d'utiliser le dispositif photoréfractif dans son ensemble ou de procéder à une division de celui-ci en pixels.

La division en pixels peut être obtenue par gravure de la structure globale ou par réalisation de contacts électriques localisés.

On voit sur la figure 7 un pixel élémentaire formé sur un substrat 42 de type n⁺.

On voit également sur la figure 7 une couche 44 de métallisation de la couche de contact de type n⁺ ainsi qu'une couche de métallisation 46 de la couche de contact de type p⁺.

Dans le cas où les puits quantiques sont réalisés à partir de GaAs, il convient de réaliser à la surface du dispositif photoréfractif une fenêtre optique comme l'illustre la figure 7 où cette fenêtre optique porte la référence 48.

Divers autres modes de réalisation particuliers sont envisageables pour le dispositif objet de l'invention.

Par exemple, au lieu de réaliser les inclusions comme on l'a indiqué plus haut, on peut réaliser ces inclusions par bien d'autres techniques, l'une d'entre elles consistant à former une couche mince de GaAs à basse température puis à recuire cette couche pour y former des inclusions d'arsenic, inclusions qui, bien que métalliques, sont capables de piéger des charges électriques et donc d'effectuer ce qui est requis pour la présente invention.

De plus, le matériau constitutif des inclusions peut différer de part et d'autre du matériau électro-optique.

Pour améliorer encore les performances du dispositif objet de l'invention, au lieu de réaliser des puits quantiques symétriques, on peut réaliser des puits quantiques asymétriques de manière similaire à ce qui est enseigné dans le document suivant :
(8) N. Susa, T. Nakahara, Appl. Phys. Lett., 60, 2457 (1992).

De plus, au lieu de former la structure à puits quantiques dans la zone intrinsèque d'une diode p-i-n, on peut former cette structure à puits quantiques dans la zone intrinsèque i d'une structure de type n⁺/i/n⁺ ou d'une structure de type p⁺/i/p⁺' en polarisant cette structure pour l'utilisation du dispositif ainsi obtenu.

Pour réaliser un dispositif conforme à l'invention, on peut utiliser l'épitaxie par jets moléculaires mais d'autres techniques, comme par exemple la technique MOCVD, peuvent être envisagées.

On a proposé plus haut des matériaux à base de GaAs ou de InP pour réaliser un dispositif conforme à l'invention mais d'autres matériaux semiconducteurs de type III-V sont envisageables, comme par exemple GaSb.

D'autres familles de matériaux semiconducteurs sont envisageables, comme par exemple la famille II-VI.

En se reportant à la figure 3, on précise ci-après un mode de fonctionnement particulier d'un dispositif conforme à l'invention.

L'inscription d'un réseau de diffraction se fait par interaction, avec le dispositif, de deux faisceaux-laser Ri1 et Ri2 dont l'ensemble constitue le rayonnement d'inscription et qui sont disposés de manière symétrique par rapport à la normale à la surface du dispositif.

La longueur d'onde de ces deux faisceaux doit être telle qu'ils soient absorbés efficacement par la super-structure du dispositif et non dans les couches de contact.

On utilise donc pour ce faire une longueur d'onde proche de 900 nm.

La puissance optique nécessaire pour écrire rapidement un réseau de charges électriques est de l'ordre de 0,1 mW/cm².

Le faisceau lumineux R1 (rayonnement de lecture) que l'on veut défléchir par l'hologramme ainsi enregistré doit avoir une longueur d'onde légèrement supérieure à celle de la résonance excitonique, c'est-à-dire 960 nm.

La puissance optique de ce faisceau R1 n'importe pas.

## Revendications

1. Dispositif photoréfractif destiné à être exposé à un rayonnement d'inscription qui est prévu pour créer un réseau de franges d'interférence dans le dispositif, et à un rayonnement de lecture que diffracte le réseau créé, ce dispositif comprenant :
- un matériau électro-optique ayant une structure de puits quantiques (2; 24) et étant formé dans une matrice semiconductrice intrinsèque (8; 22, 26), et
- des moyens de modification du champ électrique dans ce matériau lors d'un éclairement par le rayonnement d'inscription,
ce dispositif étant caractérisé en ce que les moyens de modification sont placés de part et d'autre du matériau, dans la matrice semiconductrice (8; 22, 26), et sont aptes à piéger, tant parallèlement à l'axe de la structure que perpendiculairement à cet axe, les porteurs libres engendrés par le rayonnement d'inscription.

2. Dispositif selon la revendication 1, caractérisé en ce que les moyens de modification comprennent, de part et d'autre du matériau, dans la matrice semiconductrice (8; 22, 26), au moins un puits quantique rugueux ou un plan d'inclusions aptes à piéger les porteurs libres.

3. Dispositif selon la revendication 2, caractérisé en ce que les inclusions (16) sont faites d'un matériau semiconducteur dont la bande interdite a une largeur inférieure à celle de la bande interdite du matériau des puits quantiques.

4. Dispositif selon la revendication 3, caractérisé en ce que les puits quantiques sont en GaAs, les barrières séparant ces puits en AlGaAs et les inclusions en InAs.

5. Dispositif selon la revendication 2, caractérisé en ce que les inclusions sont en un matériau métallique.

6. Dispositif selon l'une quelconque des revendications 2, 3 et 5, caractérisé en ce que le matériau constitutif des inclusions diffère de part et d'autre du matériau électro-optique.

7. Dispositif selon l'une quelconque des revendications 2 à 6, caractérisé en ce que les inclusions (16) ont des tailles de l'ordre de 5 nm.

8. Dispositif selon l'une quelconque des revendications 2 à 7, caractérisé en ce que la densité des inclusions (16) dans chaque plan d'inclusions est de l'ordre de 10¹¹ cm⁻².

9. Dispositif selon l'une quelconque des revendications 2 à 8, caractérisé en ce que l'épaisseur (38, 40) de matrice semiconductrice intrinsèque située de part et d'autre de l'ensemble qui contient le matériau électro-optique et qui est délimité par les plans d'inclusions (4, 6), est suffisamment faible pour permettre aux porteurs piégés par les inclusions de quitter celles-ci par effet tunnel à travers cette épaisseur de matrice semiconductrice intrinsèque.

10. Dispositif selon la revendication 9, caractérisé en ce que, de part et d'autre de l'ensemble qui contient le matériau électro-optique et qui est délimité par les plans d'inclusions (4, 6), la matrice semiconductrice intrinsèque (38, 40) forme une barrière de potentiel de hauteur inférieure à celle que forme cette matrice à l'intérieur de cet ensemble.

11. Dispositif selon l'une quelconque des revendications 1 à 10, caractérisé en ce que la matrice semiconductrice intrinsèque constitue la région non intentionnellement dopée d'une structure de type p-i-n ou n⁺/i/n⁺ ou p⁺/i/p⁺.

12. Dispositif selon l'une quelconque des revendications 1 à 11, caractérisé en ce que le matériau électro-optique a une structure de multi-puits quantiques.

13. Dispositif selon l'une quelconque des revendications 1 à 11, caractérisé en ce que le matériau électro-optique a une structure de super-réseau.
